# EUROPEAN PATENT APPLICATION

(11) **EP 4 454 950 A2**
(43) Date of publication of application: **30.10.2024**
(21) Application number: 23209282.5
(22) Date of filing: 11.11.2023
(51) Int. Cl.: B60R 1/02, B62J 29/00

(54) **BICYCLE MIRROR ARRANGEMENT**

(30) Priority: 28.04.2023 TW 112204128 U; 09.06.2023 TW 112205886 U
(71) Applicant: Lee, Dong-Lie, Taichung City 437 (TW)
(72) Inventor: Lee, Dong-Lie, Taichung City 437 (TW)
(74) Representative: Lang, Christian

(57) **Abstract**

A bicycle mirror comprising: a support rack, a body, a C-shaped retainer, and a screwing element. The support rack includes a first segment and a second segment. The first segment has a connector, and the connector has a first receiving edge, a second receiving edge, and an accommodation groove comprising an edge with a connection portion which has multiple locating protrusions surrounding a fixing orifice. The body is positioned on the second segment of the support rack. The C-shaped retainer is configured to fit with a gripping element and includes an insertion, a locking section, and a slit. The insertion has a fixing trench with multiple cavities defined around its bottom and configured to engage with the locating protrusions, a passing orifice, and multiple cavities. The screwing element is screwed with the threaded orifice after being inserted from the first fixing orifice of the support rack via the accommodation groove and the passing orifice of the C-shaped retainer, such that the C-shaped retainer is fitted with the gripping element.

## Description

### TECHNICAL FIELD

The present invention relates to a mirror, and more particularly to a bicycle mirror.

### BACKGROUND

As we all know, the width between the left and right handlebars of a bicycle will have many specifications and sizes depending on the type or model of the bicycle. At the same time, there are often great differences in the stature and body shape of each rider, but the mirror is installed behind the handlebar of the bicycle, which may not meet the actual needs of the rider. For example, the angle, orientation and position of the rearview mirror body may be too close to the inside of the body, thus causing the rider's body to block the mirror surface of the lens and affect the rear view.

In addition, the angle, orientation and position of the rearview mirror may also extend too far to the outside of the body. As a result, the rearview mirror may easily collide with the surrounding environment, such as with passing vehicles, no matter when the bicycle is running or parked. or pedestrians, etc., not only are prone to collision damage, but may also cause unnecessary disputes and troubles.

The present invention has arisen to mitigate and/or obviate the aforedescribed disadvantages.

### SUMMARY

The primary aspect of the present invention is to provide a bicycle mirror which contains the connection portion of the support rack configure to engage with the fixing trench of the C-shaped retainer so that the rider is capable of rotating the bicycle mirror to a desired angle freely.

Another aspect of the present invention is to provide a bicycle mirror which contains the spherical knob of the body selectively received in the fitting sleeve on one of the at least two coupling orifices of the support rack based on using requirements. In other words, the rider is capable of choosing or changing a fixing position of the body on the support rack.

To obtain above-mentioned aspect, a bicycle mirror provided by the present invention contains: a support rack, a body, a C-shaped retainer, and a screwing element.

The support rack includes a first segment and a second segment. The first segment has a connector, and the connector has a first receiving edge, a second receiving edge, and an accommodation groove communicating with the first receiving edge and the second receiving edge. The second receiving edge has a connection portion formed on the second receiving edge, the accommodation groove has a first fixing orifice defined on the first receiving edge, the second receiving edge has a second fixing orifice defined on a distal end of the connection portion, and the connection portion has multiple locating protrusions formed on a distal end thereof and surrounding the second fixing orifice.

The body positioned on the second segment of the support rack.

The C-shaped retainer is configured to fit with a gripping element, and the C-shaped retainer includes an insertion, a locking section with respect to the insertion, and a slit defined between the insertion and the locking section. The insertion has a fixing trench configured to engage with the connection portion of the support rack, a passing orifice communicating with the fixing trench and the slit, and multiple cavities defined around a bottom of the fixing trench and configured to engage with the multiple locating protrusions of the connection portion so that the support rack is limited to engage on the C-shaped retainer. The locking section has a threaded orifice with respect to the passing orifice.

The screwing element is screwed with the threaded orifice after being inserted from the first fixing orifice of the support rack via the accommodation groove and the passing orifice of the C-shaped retainer, such that the C-shaped retainer is fitted with the gripping element.

### BRIEF DESCRIPTION OF THE DRAWINGS

FIG. 1 is a perspective view showing the assembly of a bicycle mirror according to a preferred embodiment of the present invention.
FIG. 2 is a side plan view showing the assembly of the bicycle mirror according to the preferred embodiment of the present invention.
FIG. 3 is a perspective view showing the exploded components of the bicycle mirror according to the preferred embodiment of the present invention.
FIG. 4 is a cross sectional view taken along the line 4-4 of FIG. 2.
FIG. 5 is a cross sectional view of a part of FIG. 4.
FIG. 6 is a perspective view showing the assembly of a part of the bicycle mirror according to the preferred embodiment of the present invention.
FIG. 7 is a cross-sectional perspective view showing a part of the bicycle mirror according to the preferred embodiment of the present invention.
FIG. 8 is a perspective view showing the exploded components of a part of the bicycle mirror according to the preferred embodiment of the present invention.
FIG. 9 is a side plan view showing the assembly of a part of the bicycle mirror according to the preferred embodiment of the present invention.
FIG. 10 is another side plan view showing the assembly of a part of the bicycle mirror according to the preferred embodiment of the present invention.
FIG. 11 is a perspective view showing the exploded components of a part of the bicycle mirror according to the preferred embodiment of the present invention.
FIG. 12 is a cross sectional view taken along the line B-B of FIG. 10.
FIG. 13 is a cross sectional view taken along the line C-C of FIG. 12.
FIG. 14 is a perspective view showing the assembly of a part of the bicycle mirror according to the preferred embodiment of the present invention.
FIG. 15 is a perspective view showing the assembly of a part of the bicycle mirror according to the preferred embodiment of the present invention.

### DETAILED DESCRIPTION

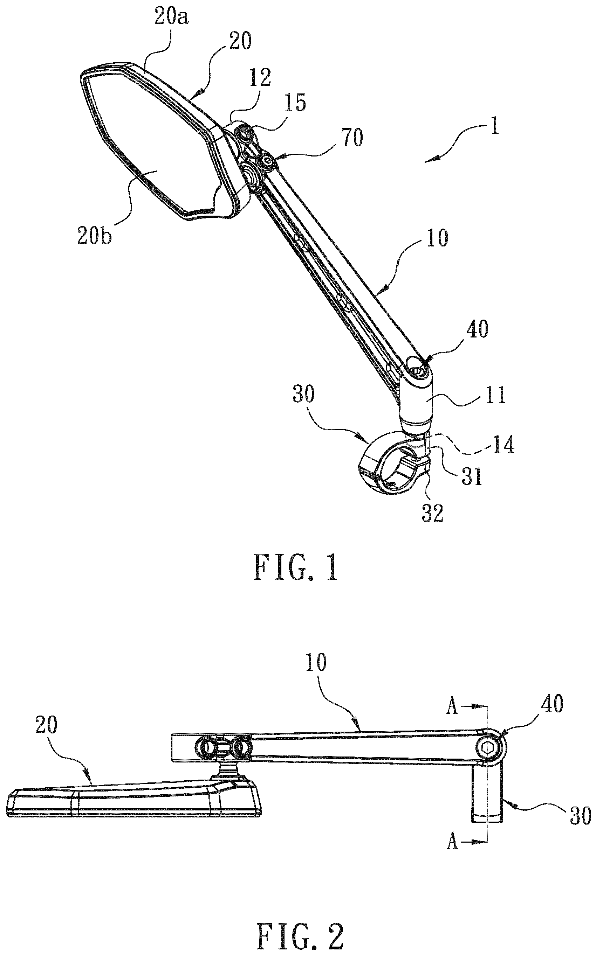

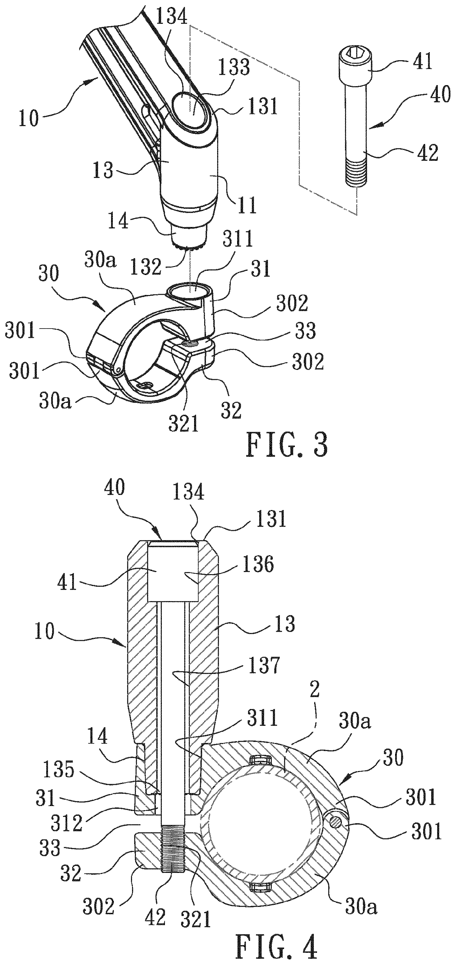

With reference to FIGS. 1-4, a bicycle mirror 1 according to a preferred embodiment of the present invention comprises: a support rack 10, a body 20, a C-shaped retainer 30, and a screwing element 40.

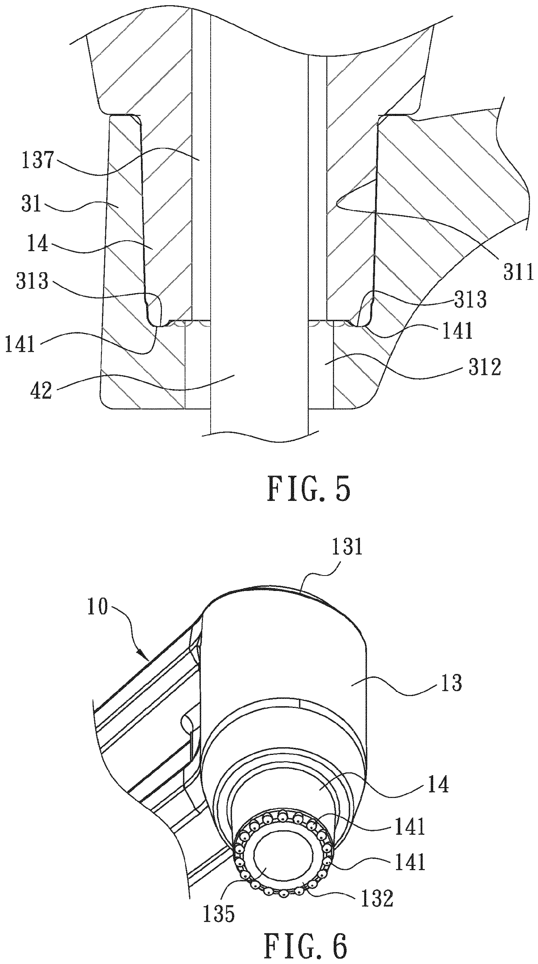

Referring to FIGS. 5-7, the support rack 10 includes a first segment 11 and a second segment 12, wherein the first segment 11 has a connector 13, and the connector 13 has a first receiving edge 131, a second receiving edge 132, and an accommodation groove 133 communicating with the first receiving edge 131 and the second receiving edge 133. The second receiving edge 132 has a connection portion 14 formed thereon, the accommodation groove 133 has a first fixing orifice 134 defined on the first receiving edge 131, the second receiving edge 133 has a second fixing orifice 135 defined on a distal end of the connection portion 14, and the connection portion 14 has multiple locating protrusions 141 formed on a distal end thereof and surrounding the second fixing orifice 135.

The body 20 is positioned on the second segment 12 of the support rack 10.

The C-shaped retainer 30 is configured to fit with a gripping element 2, for example, a handle tube or a grip sleeve of a bicycle is fitted with the C-shaped retainer 30, and the C-shaped retainer 30 includes an insertion 31, a locking section 32 with respect to the insertion 31, and a slit 33 defined between the insertion 31 and the locking section 32. The insertion 31 has a fixing trench 311 configured to engage with the connection portion 14 of the support rack 10, a passing orifice 312 communicating with the fixing trench 311 and the slit 33, and multiple cavities 313 defined around a bottom of the fixing trench 311, as shown in FIGS. 5-7, the multiple cavities 313 are configured to engage with the multiple locating protrusions 141 of the connection portion 14 so that the support rack 10 is limited to engage on the C-shaped retainer 30, wherein the locking section 32 has a threaded orifice 321 with respect to the passing orifice 312.

The screwing element 40 is screwed with the threaded orifice 321 after being inserted from the first fixing orifice 134 of the support rack 10 via the accommodation groove 133 and the passing orifice 312 of the C-shaped retainer 30, hence the C-shaped retainer 30 is fitted with the gripping element 2.

In this embodiment, the accommodation groove 133 of the connector 13 is stepped and has a large-diameter portion 136, a small-diameter portion 137 communicating with the large-diameter portion 136, a first aperture 134 defined on the large-diameter portion 136 away from the small-diameter portion 137, and a second aperture 135 defined on the small-diameter portion 137 away from the large-diameter portion 136. The screwing element 40 is a threaded bolt and includes a head 41 and a threaded shank 42, wherein the head 41 is engaged in the large-diameter portion 136, and the threaded shank 42 is screwed with the threaded orifice 321 via the small-diameter portion 137.

In this embodiment, the C-shaped retainer 30 includes two arcuate clampers 30a, the two arcuate clampers 30a have two rotatable coupling portions 301 rotatably connected, and the two arcuate clampers 30a have two free edges 302, wherein one arcuate clamper 30a has the insertion 31 formed on a free edge 302 thereof, and the other arcuate clamper 30a has the other free edge 302 formed on the other free edge 302 thereof.

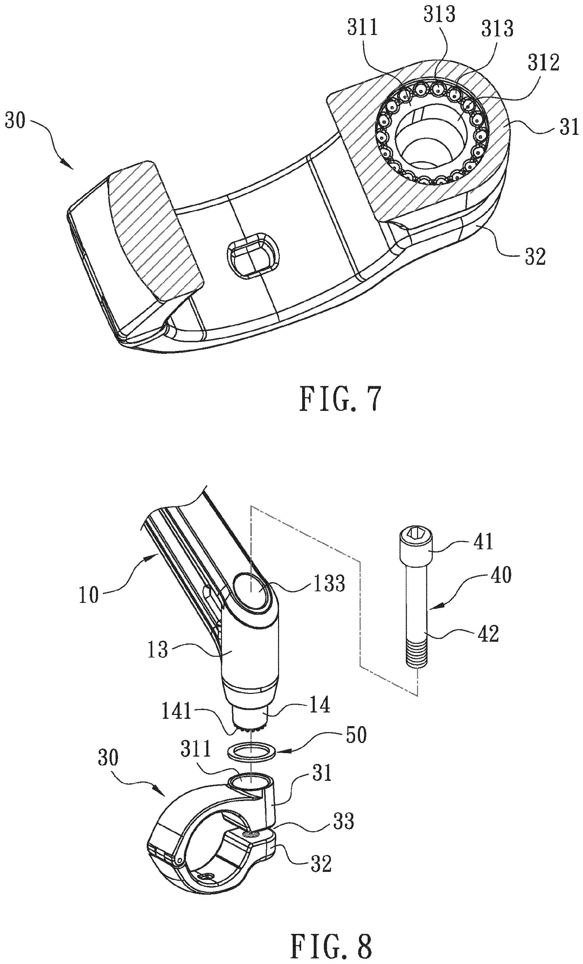

Referring to FIG. 8, the bicycle mirror 1 further comprises an insulation washer 50 configured to connect on the connection portion 14 of the support rack 10 opposite to the insertion 31 of the C-shaped retainer 30, such that the multiple locating protrusions 141 of the connection portion 14 are separated from the multiple cavities 313 of the C-shaped retainer 30, and the support rack 10 is adjustably rotated when the screwing element 40 is not rotated tightly.

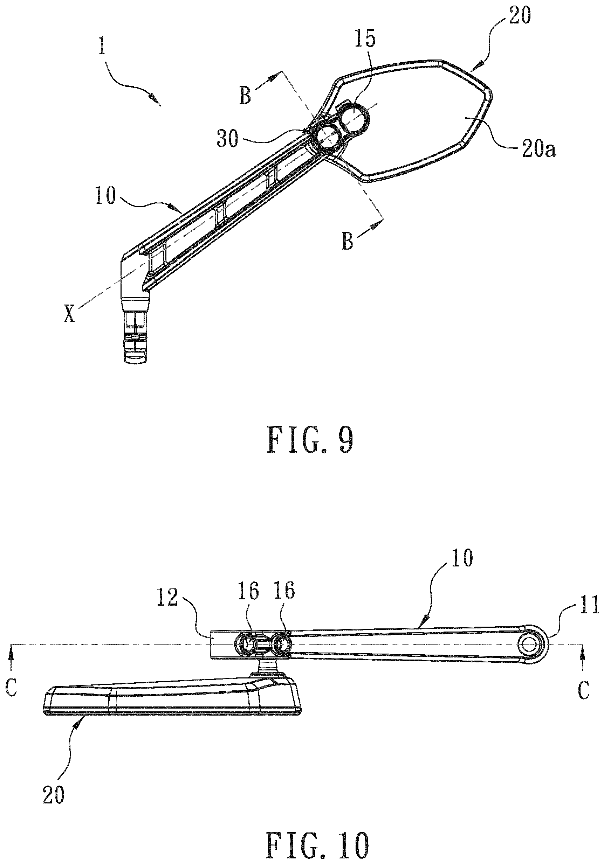

In this embodiment, the second segment 12 of the support rack 10 has at least two coupling orifices 15 extending from a forming direction X of the support rack 10, as illustrated in FIGS. 9 and 10, and a respective one coupling orifice 15 has a screwing orifice 16 formed radially and communicated therewith.

It is to be noted that the forming direction X extends from the first segment 11 to the second segment 12 or is elongated on the support rack 10.

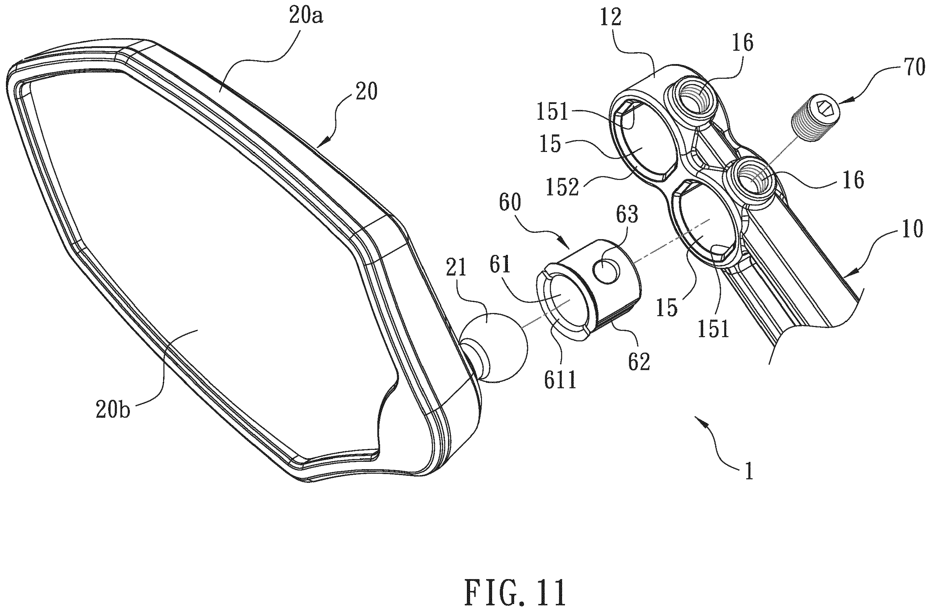

With reference to FIGS. 11-15, the bicycle mirror 1 further comprises a fitting sleeve 60 fitted in one coupling orifice 15 of the support rack 10, and the fitting sleeve 60 includes a spherical notch 61 formed therein.

The body 20 includes a spherical knob 21 configured to fit with the spherical notch 61 of the fitting sleeve 60, such that the spherical knob 21 of the body 20 is connected with the spherical notch 61 of the fitting sleeve 60 to form a ball and socket joint by which the body 20 is rotated at three degrees of freedom. Also, the body 20 includes a defining frame 20a and a lens 20b mounted on a front surface of the defining frame 20a, and the spherical knob 21 is disposed on a back surface of the defining frame 20a.

The bicycle mirror 1 further comprises a locking element 70 configured to be selectively screwed on one of the two screwing orifices 16 so as to abut against an outer wall of the fitting sleeve 60 of the one coupling orifice 15, hence the fitting sleeve 60 is flexibly engaged with the spherical knob 21. In this embodiment, the locking element 70 is a threaded bolt, such as a stud bolt.

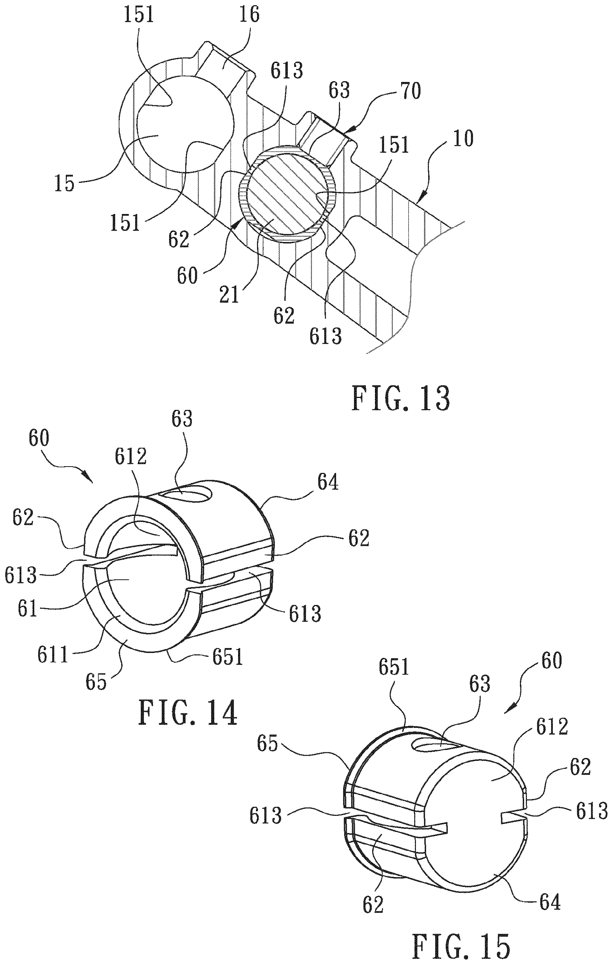

As shown in FIGS. 13-15, a respective one coupling orifice 15 has at least one limiting tangent plane 151 axially extending along an inner wall thereof. The fitting sleeve 60 includes at least one stopping tangent plane 62 axially extending along the outer wall thereof to contact with the at least one limiting tangent plane 151, thus limiting a rotation of the fitting sleeve 60.

Preferably, the inner wall of the respective one coupling orifice 15 has two limiting tangent planes 151 perpendicular to the one screwing orifice 16 of the respective one coupling orifice 15. The outer wall of the fitting sleeve 60 has two stopping tangent planes 62 contacting with the two limiting tangent planes 151.

In this embodiment, the spherical notch 61 of the fitting sleeve 60 has an opening 611 and a bottom fence 612, and a respective one stopping tangent plane 62 has a recess 613 extending from the opening 611 to the bottom fence 612 so that the outer wall of the fitting sleeve 60 is matingly engaged by the locking element 70.

The two limiting tangent planes 151 of the respective one coupling orifice 15 are perpendicular to the one screwing orifice 16 of the respective one coupling orifice 15, as shown in FIG. 13, such that when the locking element 70 is screwed with the one screwing orifice 16 of the respective one coupling orifice 15, the recess 613 of the respective one stopping tangent plane 62 is engaged with the spherical knob 21 securely so that the body 20 is adjustably rotated and is fixed at any desired angles.

In this embodiment, the fitting sleeve 60 includes a locating groove 63 formed on the outer wall thereof with respect to the one screwing orifice 16 and configured to abut against the locking element 70.

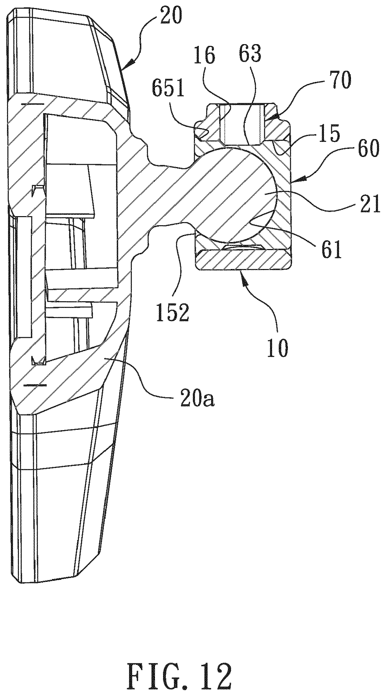

With reference to FIGS. 12, 14 and 15, the respective one coupling orifice 15 of the support rack 10 includes an inlet segment 152. The fitting sleeve 60 includes an internal segment 64 and an external segment 65, wherein the internal segment 64 is engaged from the inlet segment 152 of the respective one coupling orifice 15, and the external segment 65 has a limiting rib 651 configured to stop and limit the respective one coupling orifice 15 inside the inlet segment 152, such that the fitting sleeve 60 is fixed in the respective one coupling orifice 15 quickly, and the locating groove 63 of the fitting sleeve 60 is aligned with the one screwing orifice 16 of the support rack 10 so that the locking element 70 is screwed and is positioned exactly.

Thereby, the bicycle mirror 1 of the present invention has advantage as follows:
1) When the C-shaped retainer 30 is engaged with the gripping element 2, a rider is capable of connecting the support rack 10 with the body 20 on the C-shaped retainer 30 at a desired angle, thus satisfying various using requirements.
2) The multiple locating protrusions 141 of the connection portion 14 of the support rack 10 are engaged with the multiple cavities 313 of the fixing trench 311 of the C-shaped retainer 30, thus fixing the support rack 10 securely and stably.
3) The insulation washer 50 is defined between the connection portion 14 of the support rack 10 and the insertion 31 of the C-shaped retainer 30, such that the multiple locating protrusions 141 of the connection portion 14 are removed from the multiple cavities 313 of the C-shaped retainer 30, so after unscrewing the screwing element 40 loosely, the support rack 10 is adjustably rotated with the body 20 on the C-shaped retainer 30 to the desired angle. Thereafter, the screwing element 40 is screwed tightly so that the support rack 10 is connected with the C-shaped fitting sleeve 30 securely.
4) The spherical knob 21 of the body 20 is selectively received in the fitting sleeve 60 on one of the at least two coupling orifices 15 of the support rack 10 based on using requirements. In other words, the rider is capable of choosing or changing a fixing position of the body 20 on the support rack 10. For example, when the rider is desired to move the body 20 close to him/her, the spherical knob 21 is chosen or changed to the other coupling orifice 15 away from the second segment 12 of the support rack 10. On the contrary, when the rider is desired to move the body 20 away from him/her, the spherical knob 21 is chosen or changed to the one coupling orifice 15 close to the second segment 12 of the support rack 10, thus adjusting a length of the bicycle mirror 1 freely. Also, the lens 20b of the body 10 is adjustably changed to comply with the using requirements.

While the first embodiments of the invention have been set forth for the purpose of disclosure, modifications of the disclosed embodiments of the invention as well as other embodiments thereof may occur to those skilled in the art. The scope of the claims should not be limited by the first embodiments set forth in the examples, but should be given the broadest interpretation consistent with the description as a whole.

## Claims

1. A bicycle mirror comprising:
a support rack including a first segment and a second segment; the first segment having a connector, and the connector having a first receiving edge, a second receiving edge, and an accommodation groove communicating with the first receiving edge and the second receiving edge; the second receiving edge having a connection portion formed on the second receiving edge, the accommodation groove having a first fixing orifice defined on the first receiving edge, the second receiving edge having a second fixing orifice defined on a distal end of the connection portion, and the connection portion having multiple locating protrusions formed on a distal end thereof and surrounding the second fixing orifice;
a body positioned on the second segment of the support rack;
a C-shaped retainer configured to fit with a gripping element, and the C-shaped retainer including an insertion, a locking section with respect to the insertion, and a slit defined between the insertion and the locking section; the insertion having a fixing trench configured to engage with the connection portion of the support rack, a passing orifice communicating with the fixing trench and the slit, and multiple cavities defined around a bottom of the fixing trench and configured to engage with the multiple locating protrusions of the connection portion so that the support rack is limited to engage on the C-shaped retainer, wherein the locking section has a threaded orifice with respect to the passing orifice; and
a screwing element screwed with the threaded orifice after being inserted from the first fixing orifice of the support rack via the accommodation groove and the passing orifice of the C-shaped retainer, such that the C-shaped retainer is fitted with the gripping element.

2. The bicycle mirror as claimed in claim 1, wherein the accommodation groove of the connector is stepped and has a large-diameter portion, a small-diameter portion communicating with the large-diameter portion, a first aperture defined on the large-diameter portion away from the small-diameter portion, and a second aperture defined on the small-diameter portion away from the large-diameter portion; the screwing element is a threaded bolt and includes a head and a threaded shank, wherein the head is engaged in the large-diameter portion, and the threaded shank is screwed with the threaded orifice via the small-diameter portion.

3. The bicycle mirror as claimed in claim 1, wherein the C-shaped retainer includes two arcuate clampers, the two arcuate clampers have two rotatable coupling portions rotatably connected, and the two arcuate clampers also have two free edges, wherein one arcuate clamper has the insertion formed on a free edge thereof, and the other arcuate clamper has the other free edge formed on the other free edge thereof.

4. The bicycle mirror as claimed in claim 1 further comprising: an insulation washer configured to connect on the connection portion of the support rack opposite to the insertion of the C-shaped retainer, such that the multiple locating protrusions of the connection portion are separated from the multiple cavities of the C-shaped retainer, and the support rack is adjustably rotated when the screwing element is not rotated loosely.

5. The bicycle mirror as claimed in claim 1, wherein the second segment of the support rack has at least two coupling orifices extending from a forming direction of the support rack, and a respective one coupling orifice has a screwing orifice formed radially and communicated therewith; wherein a fitting sleeve is selectively fitted in one coupling orifice of the support rack, and the fitting sleeve includes a spherical notch formed therein; wherein the body includes a spherical knob configured to fit with the spherical notch of the fitting sleeve; and wherein a locking element configured to be selectively screwed on one of two screwing orifices so as to abut against an outer wall of the fitting sleeve of the one coupling orifice, hence the fitting sleeve is flexibly engaged with the spherical knob.

6. The bicycle mirror as claimed in claim 5, wherein a respective one coupling orifice has at least one limiting tangent plane axially extending along an inner wall thereof; the fitting sleeve includes at least one stopping tangent plane axially extending along the outer wall thereof to contact with the at least one limiting tangent plane, thus limiting a rotation of the fitting sleeve.

7. The bicycle mirror as claimed in claim 6, wherein the inner wall of the respective one coupling orifice has two limiting tangent planes perpendicular to the one screwing orifice of the respective one coupling orifice; the outer wall of the fitting sleeve has two stopping tangent planes contacting with the two limiting tangent planes.

8. The bicycle mirror as claimed in claim 6, wherein the spherical notch of the fitting sleeve has an opening and a bottom fence, and a respective one stopping tangent plane has a recess extending from the opening to the bottom fence so that the outer wall of the fitting sleeve is matingly engaged by the locking element.

9. The bicycle mirror as claimed in claim 7, wherein the spherical notch of the fitting sleeve has an opening and a bottom fence, and a respective one stopping tangent plane has a recess extending from the opening to the bottom fence so that the outer wall of the fitting sleeve is matingly engaged by the locking element.

10. The bicycle mirror as claimed in claim 5, wherein the fitting sleeve includes a locating groove formed on the outer wall thereof with respect to the one screwing orifice and configured to abut against the locking element.

11. The bicycle mirror as claimed in claim 5, wherein the fitting sleeve includes an internal segment and an external segment, the internal segment is engaged from the inlet segment of the respective one coupling orifice, and the external segment has a limiting rib configured to stop and limit the respective one coupling orifice inside the inlet segment.

12. A bicycle mirror comprising:
a support rack including a first segment and a second segment; wherein the second segment of the support rack has at least two coupling orifices extending from a forming direction of the support rack, and a respective one coupling orifice has a screwing orifice formed radially and communicated therewith;
wherein a fitting sleeve is selectively fitted in one coupling orifice of the support rack, and the fitting sleeve includes a spherical notch formed therein;
wherein the body includes a spherical knob configured to fit with the spherical notch of the fitting sleeve; and
wherein a locking element configured to be selectively screwed on one of two screwing orifices so as to abut against an outer wall of the fitting sleeve of the one coupling orifice, hence the fitting sleeve is flexibly engaged with the spherical knob.

13. The bicycle mirror as claimed in claim 12, wherein a respective one coupling orifice has at least one limiting tangent plane axially extending along an inner wall thereof; the fitting sleeve includes at least one stopping tangent plane axially extending along the outer wall thereof to contact with the at least one limiting tangent plane, thus limiting a rotation of the fitting sleeve.

14. The bicycle mirror as claimed in claim 13, wherein the inner wall of the respective one coupling orifice has two limiting tangent planes perpendicular to the one screwing orifice of the respective one coupling orifice; the outer wall of the fitting sleeve has two stopping tangent planes contacting with the two limiting tangent planes.

15. The bicycle mirror as claimed in claim 13, wherein the spherical notch of the fitting sleeve has an opening and a bottom fence, and a respective one stopping tangent plane has a recess extending from the opening to the bottom fence so that the outer wall of the fitting sleeve is matingly engaged by the locking element.

16. The bicycle mirror as claimed in claim 14, wherein the spherical notch of the fitting sleeve has an opening and a bottom fence, and a respective one stopping tangent plane has a recess extending from the opening to the bottom fence so that the outer wall of the fitting sleeve is matingly engaged by the locking element.

17. The bicycle mirror as claimed in claim 12, wherein the fitting sleeve includes a locating groove formed on the outer wall thereof with respect to the one screwing orifice and configured to abut against the locking element.

18. The bicycle mirror as claimed in claim 12, wherein the fitting sleeve includes an internal segment and an external segment, the internal segment is engaged from the inlet segment of the respective one coupling orifice, and the external segment has a limiting rib configured to stop and limit the respective one coupling orifice inside the inlet segment.

19. The bicycle mirror as claimed in claim 12, wherein the first segment has a connector, and the connector has a first receiving edge, a second receiving edge, and an accommodation groove communicating with the first receiving edge and the second receiving edge; the second receiving edge has a connection portion formed thereon, the accommodation groove has a first fixing orifice defined on the first receiving edge, the second receiving edge has a second fixing orifice defined on a distal end of the connection portion, and the connection portion has multiple locating protrusions formed on a distal end thereof and surrounding the second fixing orifice;
wherein the C-shaped retainer is configured to fit with a gripping element, and the C-shaped retainer includes an insertion, a locking section with respect to the insertion, and a slit defined between the insertion and the locking section; the insertion has a fixing trench configured to engage with the connection portion of the support rack, a passing orifice communicating with the fixing trench and the slit, and multiple cavities defined around a bottom of the fixing trench, the multiple cavities are configured to engage with the multiple locating protrusions of the connection portion so that the support rack is limited to engage on the C-shaped retainer; wherein the locking section has a threaded orifice with respect to the passing orifice; and a screwing element screwed with the threaded orifice after being inserted from the first fixing orifice of the support rack via the accommodation groove and the passing orifice of the C-shaped retainer, such that the C-shaped retainer is fitted with the gripping element.

20. The bicycle mirror as claimed in claim 19, wherein the accommodation groove of the connector is stepped and has a large-diameter portion, a small-diameter portion communicating with the large-diameter portion, a first aperture defined on the large-diameter portion away from the small-diameter portion, and a second aperture defined on the small-diameter portion away from the large-diameter portion; the screwing element is a threaded bolt and includes a head and a threaded shank, wherein the head is engaged in the large-diameter portion, and the threaded shank is screwed with the threaded orifice via the small-diameter portion.

21. The bicycle mirror as claimed in claim 19, wherein the C-shaped retainer includes two arcuate clampers, the two arcuate clampers have two rotatable coupling portions rotatably connected, and the two arcuate clampers also have two free edges, wherein one arcuate clamper has the insertion formed on a free edge thereof, and the other arcuate clamper has the other free edge formed on the other free edge thereof.

22. The bicycle mirror as claimed in claim 19 further comprising: an insulation washer configured to connect on the connection portion of the support rack opposite to the insertion of the C-shaped retainer, such that the multiple locating protrusions of the connection portion are separated from the multiple cavities of the C-shaped retainer, and the support rack is adjustably rotated when the screwing element is not rotated loosely.
